# EUROPEAN PATENT APPLICATION

(11) **EP 3 025 993 A1**
(43) Date of publication of application: **01.06.2016**
(21) Application number: 14829449.9
(22) Date of filing: 17.07.2014
(51) Int. Cl.: B65H 29/58, B65H 29/20, B07C 3/08, B65G 47/53

(54) **MAIL CONVEYING DEVICE AND METHOD IN ELECTRONIC STAMPING SYSTEM**

(30) Priority: 23.07.2013 KR 20130086596
(71) Applicant: Welltec Co., Ltd, Paju-si, Gyeonggi-do 413-902 (KR)
(72) Inventor: LEE, Jong koo, Goyang-si Gyeonggi-do 411-743 (KR)
(74) Representative: Scheele, Friedrich
(86) International application number: PCT/KR2014/006467
(87) International publication number: WO 2015/012530

(57) **Abstract**

The present invention relates to an apparatus and a method for conveying an inserted mail, which are capable of solving problems of a conventional franking machine, and an object of the present invention is to provide a franking machine having advantages that can minimize devices provided for angle conveyance, thereby significantly reducing a manufacturing cost and a size of an angle conveyance portion and can solve many problems of a conventional conveying portion, such as a driving noise. In order to solve these problems, a mail conveying apparatus of a franking machine according to the present invention includes: a first conveying means; a second conveying means configured to change a transferring direction of a mail, which is transferred along a straight path through the first conveying means, to a straight path at a predetermined angle; and a flexible pressurizing member disposed on the second conveying means to transfer the mail along the second conveying means while pressurizing the mail.

## Description

### Technical Field

The present invention relates to a structure required for conveying a mailing envelope in a franking machine that charges for an inserted mail, and more particularly, to a novel structure of a conveying means having a conveyance portion which determines a progress direction of an inserted mailing envelope until final stamping, thereby more simply manufacturing the structure at a low cost.

### Background Art

A franking machine is an apparatus which charges for an inserted mail. Regarding the franking machine, an example of a mail slot conveyance structure of a conventional franking machine is shown in Figs. 5 to 8. Fig. 5 is perspective view showing a configuration of the mail slot of the conventional franking machine. Fig. 6 is a perspective view showing an internal configuration of the mail slot of the conventional franking machine. Fig. 7 is a cross-sectional view showing a configuration of the conventional franking machine. Fig. 8 is a perspective view showing a progress direction of a mailing envelope in the conventional franking machine.

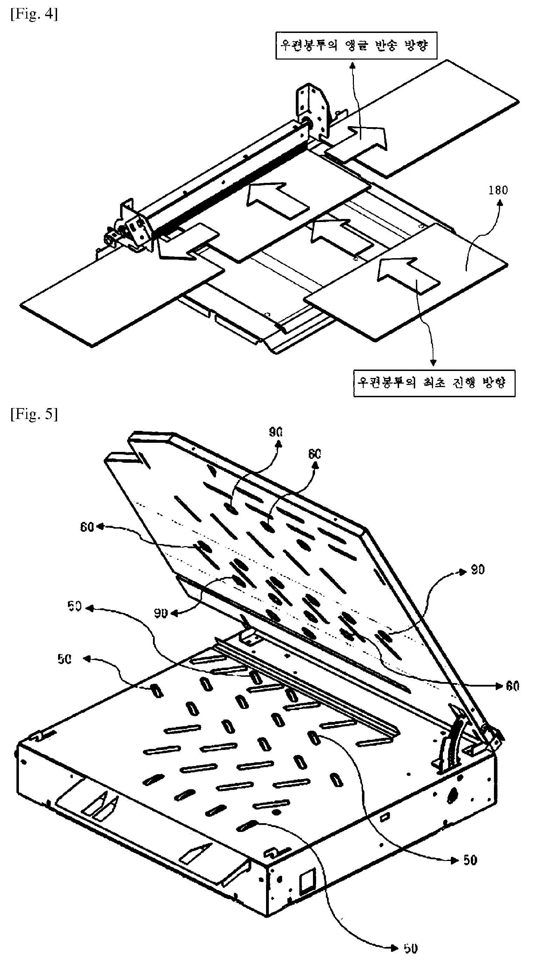

In the mail slot conveyance structure of the conventional franking machine shown in Figs. 5 to 8, a plurality of angle conveyance rollers 50 for angle conveyance are arranged at predetermined angles according to a progress direction of an initially inserted mailing envelope.

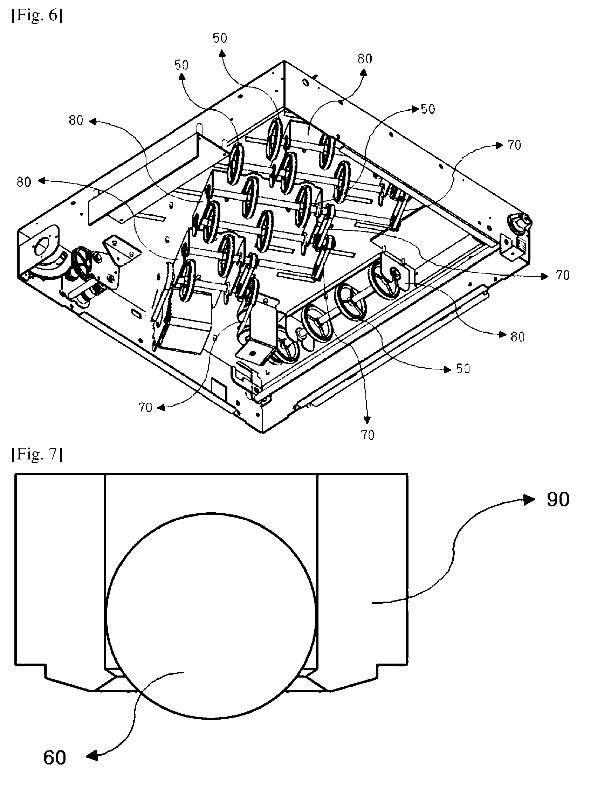

Additionally, a plurality of pressurizing ball rollers 60 are arranged on the angle conveyance rollers 50 so as to apply a pressure required for conveyance. As shown in Fig. 6, a plurality of driving transmission belts 70 for transmitting a driving of each angle conveyance roller 50 are provided, and a plurality of angle conveyance roller supporting members 80 for fixing the angle conveyance rollers 50 and a plurality of pressurizing ball roller housings 90 for supporting the pressurizing ball rollers 60 are provided (see Fig. 7).

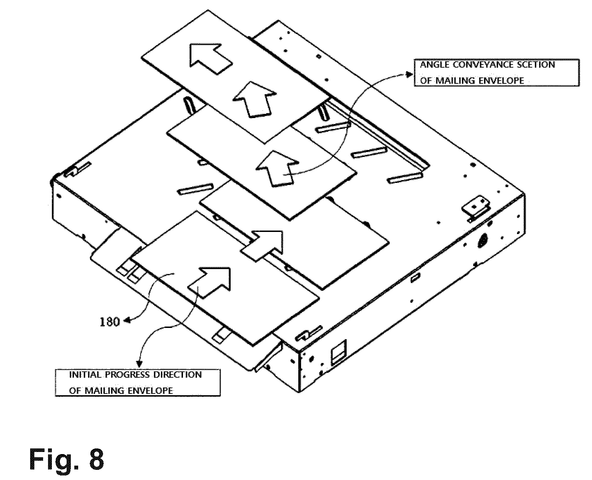

As can be seen from Fig. 8, a mail conveyance portion of the conventional franking machine needs to secure an alignment space with a predetermined length so as to align a leading end of the mailing envelope while changing a direction of the mailing envelope. In other words, the conventional structure includes portions in which the mail moves along curves. Therefore, it is necessary to arrange the plurality of angle conveyance rollers 50 at predetermined angles corresponding to the relevant portions, causing structural problems that it costs much to provide a plurality of angle conveyance driving portions, a size of an angle conveyance portion also increases, and a noise occurs between the pressurizing ball rollers 60 and the pressurizing ball roller housings 90 at the time of driving.

### SUMMARY OF INVENTION

### Technical Problem

The present invention relates to an apparatus and a method for conveying an inserted mail, which are capable of solving problems of a conventional franking machine, and an object of the present invention is to provide a franking machine having advantages that can minimize devices provided for angle conveyance, thereby significantly reducing a manufacturing cost and a size of an angle conveyance portion and can solve many problems of a conventional conveying portion, such as a driving noise.

### Solution to Problem

In order to solve these problems, a mail conveying apparatus of a franking machine according to the present invention includes: a first conveying means; a second conveying means configured to change a transferring direction of a mail, which is transferred along a straight path through the first conveying means, to a straight path at a predetermined angle; and a flexible pressurizing member disposed on the second conveying means to transfer the mail along the second conveying means while pressurizing the mail.

The first conveying means is at least one belt.

Preferably, the second conveying means is a belt and the belt is disposed in parallel to the flexible pressurizing member.

In addition, the predetermined angle is a right angle.

The mail conveying apparatus may further include a leading end alignment member configured to align a leading end of the mail transferred along the straight path through the first conveying means, and the leading end alignment member is disposed along the second conveying means.

Preferably, the flexible pressurizing member is a brush-type pressurizing member.

Furthermore, the flexible pressurizing member is configured to perform a vertical rotary motion.

The flexible pressurizing member is connected to a pressurizing member supporting member (110). The pressurizing member supporting member (110) is connected to and rotated by a rotational shaft (120) such that the flexible pressurizing member rotates at a predetermined angle. One side of the rotational shaft (120) is connected to a worm wheel (150) into which a clutch bearing (140) is press-fitted. A spring arm (160) and a tension spring (170) are connected to the other side of the rotational shaft (120) opposite to a clutch bearing connection portion.

When the mail is initially inserted, the rotational shaft (120) is rotated at a predetermined angle such that the flexible pressurizing member is lifted by a binding force of the clutch bearing (140) and is maintained in a locked state. When the leading end of the mail is aligned with a leading end alignment member (40), the second conveying means is driven and the rotational shaft (120) of the flexible pressurizing member is rotated in an opposite direction such that, while a binding force of the clutch bearing (140) that locks the rotational shaft (120) is released, the flexible pressurizing member moves downward at a faster speed than a rotating speed of an actual rotational shaft due to a tensile force of the tension spring (170) and applies a pressure to a predetermined surface of the mail to thereby change a conveying direction of the mail.

On the other hand, in order to solve the above technical problems, a mail conveying method of a franking machine according to the present invention includes the steps of: transferring a mail straightly until a leading end of the mail is aligned to come into close contact with a leading end alignment member; and pressurizing at least a portion of the straightly transferred mail from above and transferring the mail straightly in a direction forming a predetermined angle with respect to the straight transferring direction to thereby change a conveying direction of the mail.

The step of transferring the mail straightly until the leading end of the mail is aligned to come into close contact with the leading end alignment member does not include any curvilinear motion of the mail.

Preferably, the predetermined angle is a right angle.

The pressurizing from above is performed by a brush-type flexible pressurizing member.

The flexible pressurizing member is configured to perform a vertical rotary motion.

The flexible pressurizing member is connected to a pressurizing member supporting member (110). The pressurizing member supporting member (110) is connected to and rotated by a rotational shaft (120) such that the flexible pressurizing member rotates at a predetermined angle. One side of the rotational shaft (120) is connected to a worm wheel (150) into which a clutch bearing (140) is press-fitted. A spring arm (160) and a tension spring (170) are connected to the other side of the rotational shaft (120) opposite to a clutch bearing connection portion.

When the mail is initially inserted, the rotational shaft (120) is rotated at a predetermined angle such that the flexible pressurizing member is lifted by a binding force of the clutch bearing (140) and is maintained in a locked state. When the leading end of the mail is aligned with a leading end alignment member (40), the second conveying means is driven and the rotational shaft (120) of the flexible pressurizing member is rotated in an opposite direction such that a binding force of the clutch bearing (140) that locks the rotational shaft (120) is released, and the flexible pressurizing member moves downward at a faster speed than a rotating speed of an actual rotational shaft due to a tensile force of the tension spring (170) and applies a pressure to a predetermined surface of the mail to thereby change a conveying direction of the mail.

### Advantageous Effects of Invention

The present invention has the effects that provide advantages that can minimize devices provided for angle conveyance, thereby significantly reducing a manufacturing cost and a size of an angle conveyance portion and can solve many problems of a conventional conveying portion, such as a driving noise.

### Brief Description of Drawings

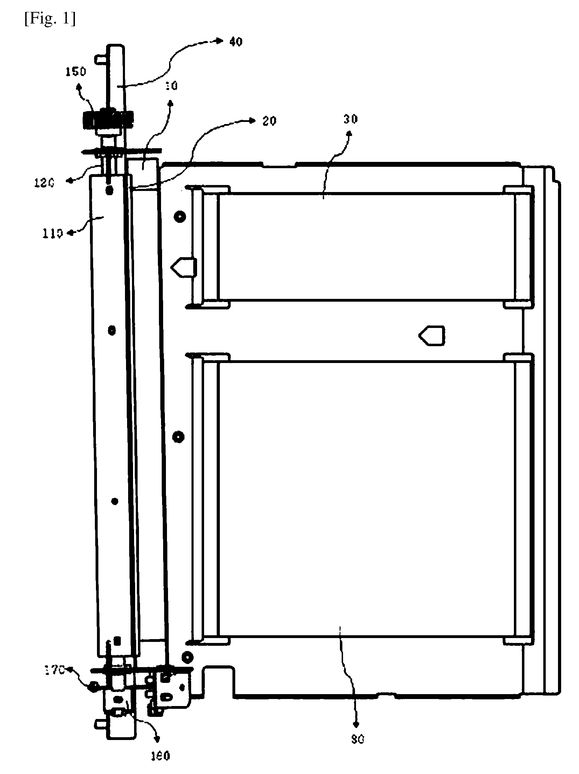

Fig. 1 is a plan view showing a configuration of a franking machine according to an embodiment of the present invention.

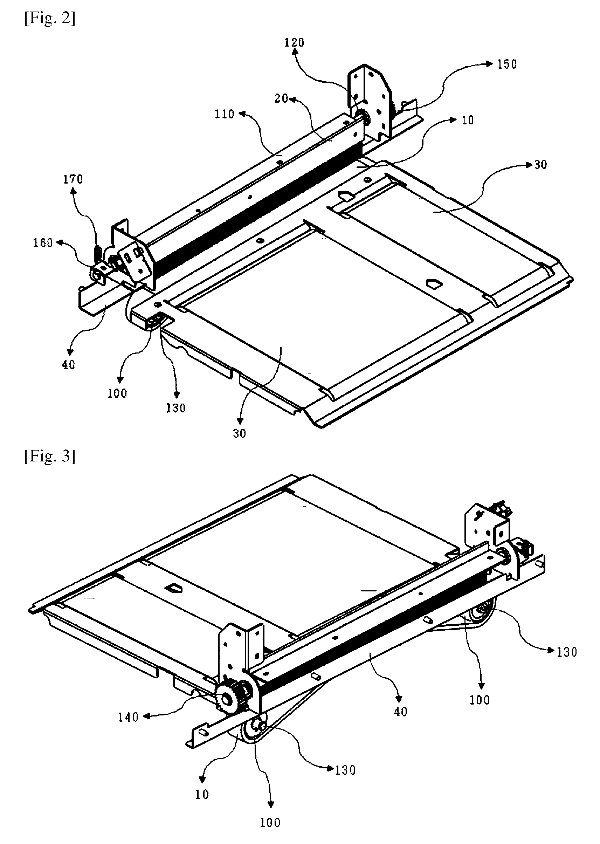

Figs. 2 and 3 are an upper perspective view and a lower perspective view of Fig. 1, respectively.

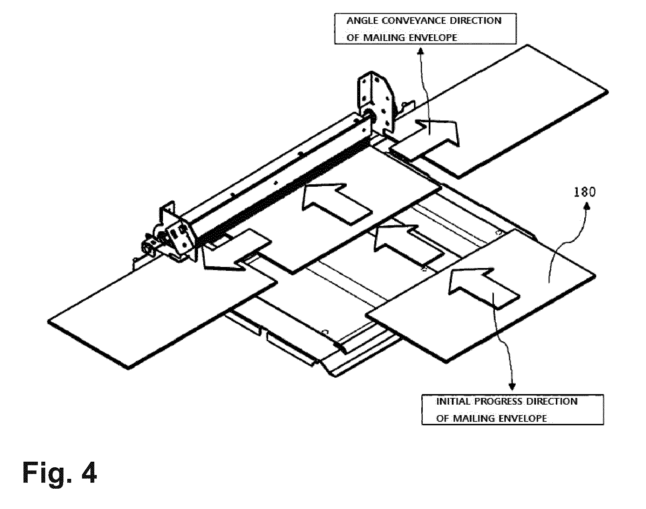

Fig. 4 is a perspective view showing a progress direction of a mailing envelope in the franking machine according to an embodiment of the present invention.
Fig. 5 is perspective view showing a configuration of a conventional franking machine.
Fig. 6 is a perspective view showing an internal configuration of the conventional franking machine.
Fig. 7 is a cross-sectional view showing a configuration of the conventional franking machine.
Fig. 8 is a perspective view showing a progress direction of a mailing envelope in the conventional franking machine.

### Description of Embodiments

Hereinafter, the preferred embodiment of the present invention will be described in detail with reference to the accompanying drawings. The terminologies or words used in the description and the claims of the present invention should not be interpreted as being limited merely to their common and dictionary meanings. On the contrary, they should be interpreted based on the meanings and concepts of the invention in keeping with the scope of the invention based on the principle that the inventor can appropriately define the terms in order to describe the invention in the best way.

Accordingly, since the embodiments described in the present specification and the configurations shown in the drawing are merely the preferred embodiment of the present invention and do not represent the whole technical spirit of the present invention, it should be understood that various equivalents and modifications can be made thereto at the time of filing the present application without departing from the sprit and scope of the present invention.

Basically, a mail conveying apparatus of a franking machine according to the present invention includes: a first conveying means configured to transfer an inserted mail along a straight path; a second conveying means configured to change a transferring direction of the mail, which is transferred along the straight path through the first conveying means, to a straight line at a predetermined angle; and a flexible pressurizing member disposed on the second conveying means to transfer the mail along the second conveying means while pressurizing the mail.

According to such a configuration, the mail is transferred straightly until a leading end of the mail is aligned to come into close contact with a leading end alignment member. Then, the mail undergoes a step of changing a conveying direction of the mail by pressurizing at least a portion of the straightly transferred mail from above and simultaneously transferring the mail straightly in a direction forming a predetermined angle with respect to the straight transferring direction. The step of transferring the mail straightly until the leading end of the mail is aligned to come into close contact with the leading end alignment member does not include any curvilinear motion of the mail.

A mail slot conveyance structure of a franking machine according to an embodiment of the present invention will be described in detail with reference to Figs. 1 and 2. Fig. 1 is a plan view showing a mail slot conveyance structure of a franking machine according to an embodiment of the present invention. Fig. 2 is an upper perspective view of Fig. 1. Fig. 3 is a lower perspective view of Fig. 1. Fig. 4 shows a progress direction of a mailing envelope in a mail slot of the franking machine according to an embodiment of the present invention.

In the present embodiment, as shown in Figs. 1 to 3, one angle conveyance belt 10 and one pressurizing brush 20 are disposed at a minimal predetermined angle required for a parallel conveyance belt 30 and a leading end of a mailing envelope.

The angle conveyance belt 10 is an example of a second conveying means, the pressurizing brush 20 is an example of a flexible pressurizing member, and the parallel conveyance belt 30 is an example of a first conveying means.

As shown in Fig. 4, when the parallel conveyance belt 30 conveys an initially inserted mailing envelope to a leading end alignment member 40 so as to stamp the inserted mailing envelope and the leading end of the mailing envelope is aligned to come into close contact with the leading end alignment member 40, the angle conveyance belt 10 is driven and the pressurizing brush 20 moves downward to pressurize a predetermined surface of the mailing envelope to thereby change a conveying direction.

That is, in the present embodiment, when an angle conveyance portion for angle conveyance is configured, one angle conveyance belt 10 is disposed to have a minimal angle required for aligning the leading end of the inserted mail in an initial conveying direction, and one pressurizing brush 20 is disposed on the angle conveyance belt 10 in parallel to the angle conveyance belt 10 so as to apply a pressure required for angle conveyance. Hence, it is unnecessary to perform a so-called curved conveyance change motion to change the conveying direction of the mailing envelope while forming a fluent curve like the conventional art and it is unnecessary to provide devices required for the curved conveyance change motion. Therefore, as compared with the conventional structure, the size of the apparatus can be reduced. In addition, since the franking machine includes a minimal conveyance structure required for angle conveyance, it is possible to simply manufacture the franking machine at a low cost.

In addition, as one example, one angle conveyance belt 10 for angle conveyance of the mailing envelope is disposed at an angle maximally perpendicular to the progress direction of the initially inserted mailing envelope (see Fig. 4), thereby minimizing a space of the angle conveyance portion.

As one example of the conveyance structure, as shown in Fig. 3, the angle conveyance belt 10 is disposed in two driving rollers 100, and the driving rollers 100 are connected to and supported by a driving roller supporting member 130.

The pressurizing brush 20 for applying a pressure required for conveyance is connected to a pressurizing brush supporting member 110. The pressurizing brush supporting member 110 is connected to and rotated by a rotational shaft 120 such that the pressurizing brush 20 rotates at a predetermined angle. On the other hand, in the present embodiment, the flexible pressurizing member is a brush type, but it is not limited thereto. It will be obvious to those skilled in the art that the pressurizing means having various shapes can be adopted as long as the pressurizing means can exert the same function of enabling the straight conveyance of the mail while applying a constant pressure to the mail.

One side of the rotational shaft 120 is connected to a worm wheel 150 into which a clutch bearing 140 is press-fitted, and a spring arm 160 and a tension spring 170 are connected to the other side of the rotational shaft 120 opposite to a clutch bearing connection portion, such that a tensile force of the tension spring 170 is used as the pressure to be applied to the mailing envelope.

When the mailing envelope is initially inserted, the rotational shaft 120 is rotated at a predetermined angle such that the pressurizing brush 20 is lifted by a binding force of the clutch bearing 140 and is maintained in a locked state. When the leading end of the mailing envelope is aligned with the leading end alignment member 40, the angle conveyance belt 10 is driven and the rotational shaft 120 of the pressurizing brush 20 is rotated in an opposite direction. Thus, the binding force of the clutch bearing 140 that locks the rotational shaft 120 is released, and the pressurizing brush 20 moves downward at a faster speed than a rotating speed of an actual rotational shaft due to the tensile force of the tension spring 170 and applies a pressure to a predetermined surface of the mailing envelope to thereby change the conveying direction of the mailing envelope.

While the present invention has been shown and described with reference to specific embodiments, it will be understood by those skilled in the art that various modifications can be made thereto without departing from the spirit and scope of the present invention. Therefore, the scope of the present invention should not be determined by the above-described embodiments and should be determined by the appended claims and their equivalents.

### Industrial Applicability.

The present invention relates to a structure required for conveying a mailing envelope in a franking machine that charges for an inserted mail and can be used for a mail conveying apparatus of the franking machine.

## Claims

1. A mail conveying apparatus of a franking machine, comprising:
a first conveying means;
a second conveying means configured to change a transferring direction of a mail, which is transferred along a straight path through the first conveying means, to a straight path at a predetermined angle; and
a flexible pressurizing member disposed on the second conveying means to transfer the mail along the second conveying means while pressurizing the mail.

2. The mail conveying apparatus of claim 1, wherein the first conveying means is at least one belt.

3. The mail conveying apparatus of claim 1, wherein the second conveying means is a belt.

4. The mail conveying apparatus of claim 3, wherein the belt, which is the second conveying means, is disposed in parallel to the flexible pressurizing member.

5. The mail conveying apparatus of claim 1, wherein the predetermined angle is a right angle.

6. The mail conveying apparatus of claim 1, further comprising a leading end alignment member configured to align a leading end of the mail transferred along the straight path through the first conveying means,
wherein the leading end alignment member is disposed along the second conveying means.

7. The mail conveying apparatus of claim 1, wherein the flexible pressurizing member is a brush-type pressurizing member.

8. The mail conveying apparatus of claim 6, wherein the flexible pressurizing member is configured to perform a vertical rotary motion.

9. The mail conveying apparatus of claim 8, wherein
the flexible pressurizing member is connected to a pressurizing member supporting member (110),
the pressurizing member supporting member (110) is connected to and rotated by a rotational shaft (120) such that the flexible pressurizing member rotates at a predetermined angle,
one side of the rotational shaft (120) is connected to a worm wheel (150) into which a clutch bearing (140) is press-fitted, and
a spring arm (160) and a tension spring (170) are connected to the other side of the rotational shaft (120) opposite to a clutch bearing connection portion.

10. The mail conveying apparatus of claim 9, wherein
when the mail is initially inserted, the rotational shaft (120) is rotated at a predetermined angle such that the flexible pressurizing member is lifted by a binding force of the clutch bearing (140) and is maintained in a locked state, and
when the leading end of the mail is aligned with a leading end alignment member (40), the second conveying means is driven and the rotational shaft (120) of the flexible pressurizing member is rotated in an opposite direction such that, while a binding force of the clutch bearing (140) that locks the rotational shaft (120) is released, the flexible pressurizing member moves downward at a faster speed than a rotating speed of an actual rotational shaft due to a tensile force of the tension spring (170) and applies a pressure to a predetermined surface of the mail to thereby change a conveying direction of the mail.

11. A mail conveying method of a franking machine, comprising the steps of:
transferring a mail straightly until a leading end of the mail is aligned to come into close contact with a leading end alignment member; and
pressurizing at least a portion of the straightly transferred mail from above and transferring the mail straightly in a direction forming a predetermined angle with respect to the straight transferring direction to thereby change a conveying direction of the mail.

12. The mail conveying method of claim 11, wherein the step of transferring the mail straightly until the leading end of the mail is aligned to come into close contact with the leading end alignment member does not include any curvilinear motion of the mail.

13. The mail conveying method of claim 12, wherein the predetermined angle is a right angle.

14. The mail conveying method of claim 13, wherein the pressurizing from above is performed by a brush-type flexible pressurizing member.

15. The mail conveying method of claim 14, wherein the flexible pressurizing member is configured to perform a vertical rotary motion.

16. The mail conveying method of claim 15, wherein
the flexible pressurizing member is connected to a pressurizing member supporting member (110),
the pressurizing member supporting member (110) is connected to and rotated by a rotational shaft (120) such that the flexible pressurizing member rotates at a predetermined angle,
one side of the rotational shaft (120) is connected to a worm wheel (150) into which a clutch bearing (140) is press-fitted, and
a spring arm (160) and a tension spring (170) are connected to the other side of the rotational shaft (120) opposite to a clutch bearing connection portion.

17. The mail conveying method of claim 16, wherein
when the mail is initially inserted, the rotational shaft (120) is rotated at a predetermined angle such that the flexible pressurizing member is lifted by a binding force of the clutch bearing (140) and is maintained in a locked state, and
when the leading end of the mail is aligned with a leading end alignment member (40), the second conveying means is driven and the rotational shaft (120) of the flexible pressurizing member is rotated in an opposite direction such that a binding force of the clutch bearing (140) that locks the rotational shaft (120) is released, and the flexible pressurizing member moves downward at a faster speed than a rotating speed of an actual rotational shaft due to a tensile force of the tension spring (170) and applies a pressure to a predetermined surface of the mail to thereby change a conveying direction of the mail.
